# EUROPEAN PATENT SPECIFICATION

(11) **EP 1 705 089 B1**
(45) Date of publication and mention of the grant of the patent: **02.10.2013**
(21) Application number: 06111406.2
(22) Date of filing: 20.03.2006
(51) Int. Cl.: B60T 8/32, B60B 27/00, G01P 3/44, F16C 19/18, F16C 33/78, F16J 15/32

(54) **A wheel bearing apparatus incorporated with a wheel speed detecting apparatus**
Radlager mit Radgeschwindigkeitssensor
Palier de roue avec capteur pour la vitesse de rotation de la roue

(30) Priority: 22.03.2005 JP 2005081813
(43) Date of publication of application: 27.09.2006
(73) Proprietor: NTN Corporation, Osaka (JP)
(72) Inventor: Suzuki, Syougo, Iwata-shi, Shizuoka-ken (JP)
(74) Representative: Cohausz & Florack

(56) References cited:
- EP-A- 1 058 119
- WO-A-2005/010382
- WO-A-2006/088012
- JP-A- 3 279 061
- JP-A- 2003 254 985
- US-A- 4 783 180
- US-A1- 2003 053 726
- US-A1- 2004 183 702
- FOSTER D A ED - SOCIETY OF AUTOMOTIVE ENGINEERS: "DEVELOPMENTS IN WHEEL SPEED SENSING" ABS TRACTION CONTROL. DETROIT, FEB. 29 - MAR. 4, 1988; [INTERNATIONAL CONGRESS AND EXPOSITION OF THE SAE], WARRENDALE, SAE, US, vol. -, 29 February 1988 (1988-02-29), pages 39-45, XP000118745

## Description

### BACKGROUND OF THE INVENTION

### Field of the Invention

The present invention relates to a wheel bearing apparatus for a wheel of vehicle, and more particularly to a wheel bearing apparatus to which is incorporated a wheel Speed detecting apparatus for detecting a rotation speed of wheel of vehicle.

### Description of Background Art

It has been generally known a wheel bearing apparatus which can support a wheel of vehicle relative to a suspension apparatus and to which is incorporated a wheel speed detecting apparatus for detecting a rotation speed of wheel of vehicle to detect the wheel speed for controlling the anti-lock braking system (ABS). Such a bearing apparatus generally comprises a wheel speed detecting apparatus including a magnetic encoder having magnetic poles alternately arranged along its circumferential direction integrated in a sealing apparatus arranged between inner and outer members for containing rolling elements (balls or rollers), and a wheel speed detecting sensor for detecting the variation in magnetic poles of the magnetic encoder according to the rotation of wheel.

The wheel speed sensor is usually mounted on a knuckle after the wheel bearing apparatus has mounted on the knuckle forming a suspension apparatus. In recent, it has been proposed a wheel bearing apparatus incorporated with a wheel speed detecting apparatus in which a wheel speed detecting sensor is self-contained within the wheel bearing in order to reduce the size of the wheel bearing apparatus as well as to eliminate troublesome in air gap adjustment between the wheel speed sensor and the magnetic encoder.

An example of the wheel bearing apparatus incorporated with a wheel speed detecting apparatus is known in the prior art (e.g. Japanese Laid-open Patent Publication No. 2003-254985) as shown in Fig. 5. This wheel bearing apparatus incorporated with a wheel speed detecting apparatus comprises an outer member 51 forming a stationary member secured on a suspension apparatus (not shown), and a hub wheel 55, and an inner member 52 (the inner member 52 includes a hub wheel 55 and an inner ring 56) inserted in the outer member 51 via double row rolling elements (balls) 53 and 53 there between. The outer member 51 has a wheel mount flange formed integrally therewith at one end and double row outer raceway surfaces 51a and 51a formed on the inner circumferential surface thereof. On the other hand, the inner member 52 is formed with double row inner raceway surfaces 55a and 56a opposite to the double row outer raceway surfaces 51a and 51a. One (55a) of these double row inner raceway surfaces is formed on the outer circumferential surface of the hub wheel 55 and the other (56a) is formed on the outer circumferential surface of the inner ring 6 press-fit on the cylindrical portion 55b extending axially from the inner raceway surface 55a of the hub wheel 55. Double row rolling elements 53 and 53 are arranged between the outer and inner raceway surfaces 51a and 51 a; 55a and 56a respectively and held by cages 57 and 57.

The hub wheel 55 has a wheel mount flange 54 for mount a wheel (not shown) formed integrally therewith and hub bolts 54a for securing the wheel are rigidly secured on the wheel mount flange 54 equidistantly along its periphery. A serration 55c is formed on the inner circumferential surface of the hub wheel 55 into which a stem portion 61 of an outer joint member 60 forming the constant velocity universal joint (not shown) is inserted. Seals 58 and 59 are arranged at both ends of the outer member 51 to prevent leak of grease contained within the bearing as well as ingress of rain water or dusts into the bearing.

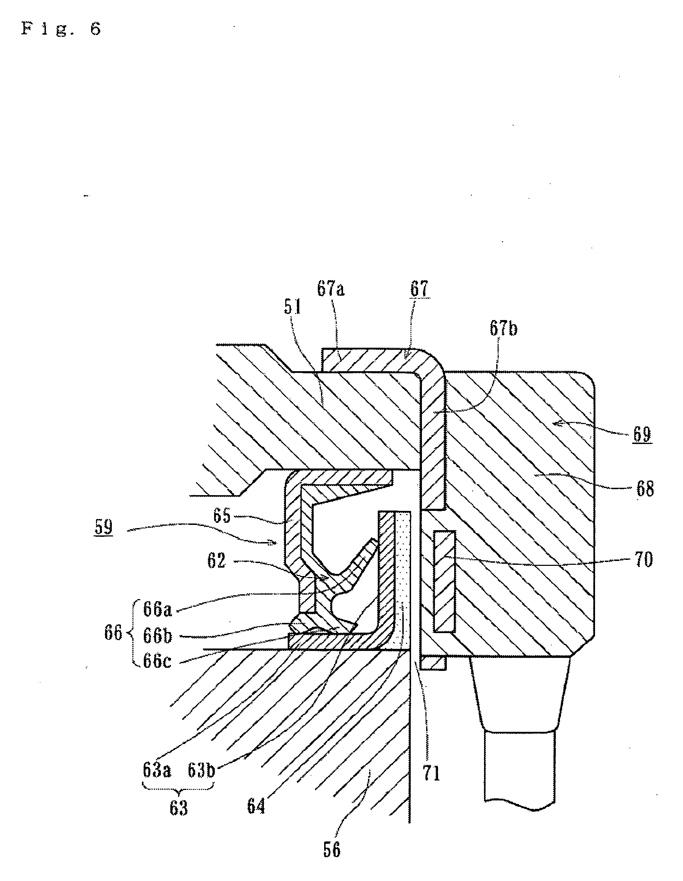

The seal 59 of the inboard side, as shown in an enlarged view of Fig. 6, is fit in the inner circumference at the end of the outer member 51 and comprises a first sealing plate 62, and a second sealing plate 63 having a "L"-shaped cross-section. The second sealing plate 63 has a cylindrical portion 63a fit on the outer circumference of the inner ring 56, and a standing portion 63b extending radially outward from the cylindrical portion 63a. Adhered via vulcanized adhesion on the outer surface of the standing portion 63b is a magnetic encoder 64 formed of rubber magnet in which magnetic poles N and S are alternately arranged along the circumference direction.

On the other hand, the first sealing plate 62 comprises a metal core 65 having a substantially "L"-shaped cross-section, and a sealing member 66 including a side lip 66a sliding contact with the inner side surface of the standing portion 63b of the second sealing plate 63 and a pair of radial lips 66b and 66c sliding contact with the cylindrical portion 63a of the second sealing plate 63.

Mounted on one end of the outer member 51 is an annular sensor holder 69 comprising a fitting cylinder 67 and a holding portion 68 connected to the fitting cylinder 67. The fitting cylinder 67 has an annular configuration of "L"-shaped cross-section and comprises a cylindrical portion 67a and a flange portion 67b extending radially inward from the cylindrical portion 67a.

The holding portion 68 is made by synthetic resin molded to an annular body in which a wheel speed sensor 70 is embedded. The wheel speed sensor 70 is arranged opposite to the magnetic encoder 64 via a predetermined air gap there between. The wheel speed sensor 70 comprises a magnetic detecting element such as a Hall element, a magnetic resistance element (MR element) etc. changing characteristics in accordance with the flowing direction of magnetic flux, and an IC incorporated with a waveform shaping circuit for shaping the output waveform of the magnetic detecting element.

A labyrinth seal is formed by a small gap 71 by arranging the flange portion 67b of the fitting cylinder 67 with being opposed to the end surface of the inner ring 56 via the small gap 71. This enables to prevent ingress of foreign matter such as magnetic powder into a space between the magnetic encoder 64 and the detecting portion of the wheel speed sensor 70 from the outside of the bearing apparatus although before the stern portion 61 of the outer joint member 60 is inserted into the hub wheel 55 including a course in which the bearing apparatus is transferred to an assemble line of a manufacturer of automobile. Accordingly, the reliability of detecting the rotation speed of wheel can be improved.

However, although the wheel bearing apparatus incorporated with a wheel speed detecting apparatus of the prior art has a superior effects mentioned above, it is impossible to prevent ingress of foreign matter such as magnetic powder into a space between the magnetic encoder 64 and the detecting portion of the wheel speed sensor 70 from the outside of the bearing apparatus under severe circumstances in real running of vehicle. Another example of a wheel bearing apparatus incorporated with a wheel speed detecting apparatus with the features of the preamble of claim 1 is known from JP 03 279061 A.

### SUMMARY OF THE INVENTION

It is an object of the present invention to provide a wheel bearing apparatus incorporated with a wheel speed detecting apparatus which is small in size and can prevent ingress of foreign matter into the wheel speed detecting region and thus can improve the durability as well as the reliability.

For achieving the object mentioned above, there is provided, according to the present invention, a wheel bearing apparatus incorporated with a wheel speed detecting apparatus comprising an outer member having a body mount flange formed integrally therewith and double row outer raceway surfaces formed on the inner circumferential surface of the outer member; an inner member including a hub wheel having a wheel mount flange formed integrally therewith at one end thereof and a cylindrical portion axially extending from the wheel mount flange and including an inner ring fit on the cylindrical portion of the hub wheel; double row inner raceway surfaces opposite to the double row outer raceway surfaces, one of the inner raceway surfaces being formed on the outer circumferential surface of the inner ring; double row rolling elements arranged between the outer and inner raceway surfaces; an encoder mounted on the outer circumferential surface of the inner ring; a sensor holder arranged on the end of the outer member oppositely to the encoder and including an annular fitting member and a holding portion formed by synthetic resin molded integrally with the annular fitting member and embedded therein a wheel speed detecting sensor oppositely to the encoder via a predetermined gap; a first seal; wherein the encoder has its magnetic characteristics varying alternately and equidistantly along its circumferential direction; wherein a second seal is arranged at the inboard side of the encoder and at the inboard side of the wheel speed detecting sensor, said second seal including a first sealing plate and a second sealing plate fit respectively on the annular fitting member and the inner ring arranged oppositely with each other, wherein the tip end of the annular fitting member engages the holding portion, wherein the annular fitting member comprises a cylindrical fitting portion, a flange portion extending radially inward from the fitting portion and a cylindrical portion extending axially from the flange portion, characterized in that one of the inner raceway surfaces is formed on the outer circumferential surface of the hub wheel; the cylindrical fitting portion is press fit onto the outer circumferential surface of the outer member; the flange portion is in contact with the end face of the outer member; and the first sealing plate is fit into the cylindrical portion.

According to the present invention, since the wheel bearing apparatus incorporated with a wheel speed detecting apparatus comprises an encoder mounted on the outer circumferential surface of the inner ring; and a sensor holder arranged on the end of the outer member oppositely to the encoder and including an annular fitting member and a holding portion formed by synthetic resin molded integrally with the annular fitting member and embedded therein a wheel speed detecting sensor oppositely to the encoder via a predetermined gap; a first seal; wherein the encoder has its magnetic characteristics varying alternately and equidistantly along its circumferential direction; wherein a second seal is arranged at the inboard side of the encoder and at the inboard side of the wheel speed detecting sensor, said second seal including a first sealing plate and a second sealing plate fit respectively on the annular fitting member and the inner ring arranged oppositely with each other, wherein the tip end of the annular fitting member engages the holding portion, it is possible to prevent ingress of foreign matter such as magnetic powder into a space between the magnetic encoder and the detecting portion of the wheel speed sensor from the outside of the bearing apparatus although before the stern portion of the outer joint member is inserted into the hub wheel including a course in which the bearing apparatus is transferred to an assemble line of a manufacturer of automobile and also under severe circumstances in real running of vehicle. Thus it is also possible to increase the strength of connection between the annular fitting member and the holding portion and thus to remarkably improve the reliability of detection of the wheel rotation speed.

According to the present invention, since the annular fitting member comprises a cylindrical fitting portion press fit onto the outer circumferential surface of the outer member, a flange portion extending radially inward from the fitting portion and being contacted with the end face of the outer member, and a cylindrical portion extending axially from the flange portion, and the first sealing plate is fit into the cylindrical portion, it is possible to reduce the radial size of the wheel bearing apparatus and to simplify the structure of the wheel speed sensor and its associated parts and thus to further improve the workability of its assembly.

According to the preferred embodiment of the present invention of claim 2, since the tip end of the cylindrical portion of the annular fitting member extends radially outward from the cylindrical portion in an inclined form, and the plastic resin forming the holding portion is molded as it envelopes the tip end of the cylindrical portion, and according to preferred embodiment of the present invention of claim 3, since the annular fitting member has an engaging portion extending radially outward from the cylindrical portion, and the tip end of the engaging portion is caulked onto the holding portion after the holding portion having been molded onto the annular fitting member, it is possible to increase the strength of connection between the annular fitting member and the holding portion and thus to prevent separation of them due to vibration of the wheel bearing apparatus during its transportation and handling.

According to the preferred embodiment of the present invention of claim 4, since the second sealing plate has a substantially "L" shaped cross-section having a cylindrical portion adapted to be fit onto the inner ring and a standing portion extending radially outward from the cylindrical portion, and sealing lips of a sealing member mounted on the first sealing plate slidably contact the second sealing plates, it is possible to improve the sealability of the wheel bearing apparatus and thus to prevent leak of grease contained within the bearing as well as ingress of rain water or dusts into the bearing.

### Effects of the Invention

The wheel bearing apparatus incorporated with a wheel speed detecting apparatus of the present invention comprises an outer member having a body mount flange formed integrally therewith and double row outer raceway surfaces formed on the inner circumferential surface of the outer member; an inner member including a hub wheel having a wheel mount flange formed integrally therewith at one end thereof and a cylindrical portion axially extending from the wheel mount flange and including an inner ring fit on the cylindrical portion of the hub wheel; double row inner raceway surfaces opposite to the double row outer raceway surfaces, one of the inner raceway surfaces being formed on the outer circumferential surface of the inner ring; double row rolling elements rotatably arranged between the outer and inner raceway surfaces; an encoder mounted on the outer circumferential surface of the inner ring; a sensor holder arranged on the end of the outer member oppositely to the encoder and including an annular fitting member and a holding portion formed by synthetic resin molded integrally with the annular fitting member and embedded therein a wheel speed detecting sensor oppositely to the encoder via a predetermined gap; a first seal; wherein the encoder has its magnetic characteristics varying alternately and equidistantly along its circumferential direction; wherein a second seal is arranged at the inboard side of the encoder and at the inboard side of the wheel speed detecting sensor, said second seal including a first sealing plate and a second sealing plate fit respectively on the annular fitting member and the inner ring arranged oppositely with each other, wherein the tip end of the annular fitting member engages the holding portion, wherein the annular fitting member comprises a cylindrical fitting portion, a flange portion extending radially inward from the fitting portion and a cylindrical portion extending axially from the flange portion, characterized in that one of the inner raceway surfaces is formed on the outer circumferential surface of the hub wheel; the cylindrical fitting portion is press fit onto the outer circumferential surface of the outer member; the flange portion is in contact with the end face of the outer member; and the first sealing plate is fit into the cylindrical portion. Accordingly, it is possible to prevent ingress of foreign matter such as magnetic powder into a space between the magnetic encoder and the detecting portion of the wheel speed sensor from the outside of the bearing apparatus although before the stern portion of the outer joint member is inserted into the hub wheel including a course in which the bearing apparatus is transferred to an assemble line of a manufacturer of automobile and also under severe circumstances in real running of vehicle. Thus it is also possible to increase the strength of connection between the annular fitting member and the holding portion and thus to remarkably improve the reliability of detection of the wheel rotation speed.

### Best mode for carrying out the present invention

Best mode for carrying out the present invention is a wheel bearing apparatus incorporated with a wheel speed detecting apparatus comprising an outer member having a body mount flange formed integrally therewith and double row outer raceway surfaces formed on the inner circumferential surface üf the outer member; an inner member including a hub wheel having a wheel mount flange formed integrally therewith at one end thereof and a cylindrical portion axially extending from the wheel mount flange and including an inner ring fit on the cylindrical portion of the hub wheel; double row inner raceway surfaces opposite to the double row outer raceway surfaces, one of the inner raceway surfaces being formed on the outer circumferential surface of the inner ring; double row rolling elements rotatably arranged between the outer and inner raceway surfaces; an encoder mounted on the outer circumferential surface of the inner ring; and a sensor holder arranged on the end of the outer member oppositely to the encoder and including an annular fitting member and a holding portion formed by synthetic resin molded integrally with the annular fitting member and embedded therein a wheel speed detecting sensor oppositely to the encoder via a predetermined gap; a first seal; wherein the encoder has its magnetic characteristics varying alternately and equidistantly along its circumferential direction; wherein a second seal is arranged at the inboard side of the encoder and at the inboard side of the wheel speed detecting sensor, said second seal including a first sealing plate and a second sealing plate fit respectively on the annular fitting member and the inner ring arranged oppositely with each other, wherein the tip end of the annular fitting member engages the holding portion, wherein the annular fitting member comprises a cylindrical fitting portion, a flange portion extending radially inward from the fitting portion and a cylindrical portion extending axially from the flange portion, characterized in that one of the inner raceway surfaces is formed on the outer circumferential surface of the hub wheel; the cylindrical fitting portion is press fit onto the outer circumferential surface of the outer member; the flange portion is in contact with the end face of the outer member; and the first sealing plate is fit into the cylindrical portion.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a longitudinal-section view of a first embodiment of a wheel bearing apparatus incorporated with a wheel speed detecting apparatus of the present invention;
Fig. 2 is a partially enlarged longitudinal-section view of Fig. 1;
Fig. 3 is a partially enlarged longitudinal-section view of a second embodiment of a wheel bearing apparatus incorporated with a wheel speed detecting apparatus of the present invention;
Fig. 4 is a partially enlarged longitudinal-section Vlew of a third embodiment of a wheel bearing apparatus incorporated with a wheel speed detecting apparatus of the present invention;

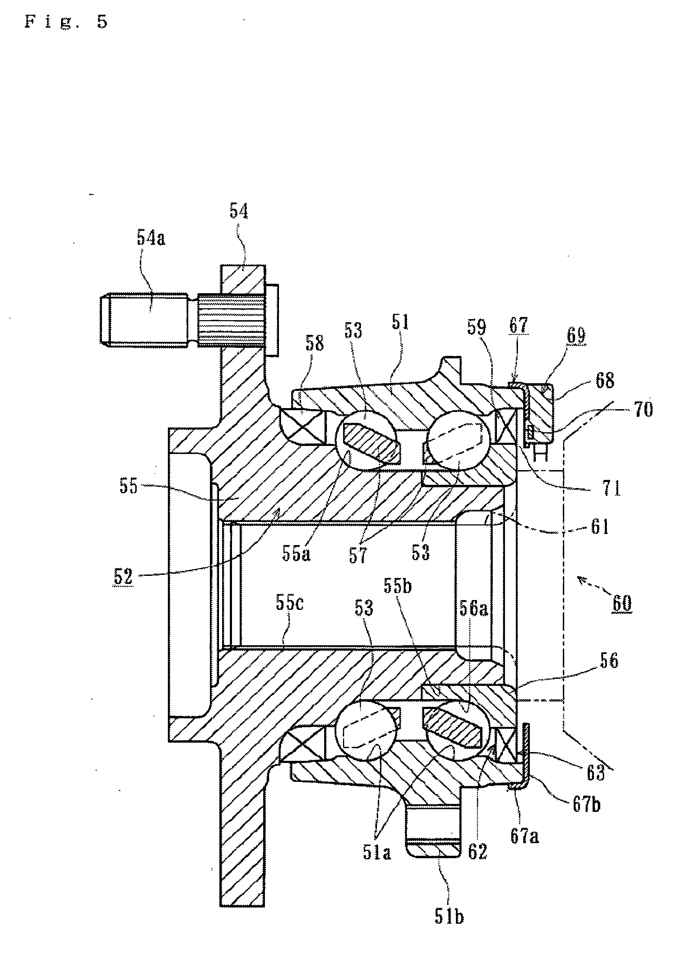

Fig. 5 is a longitudinal-section view of a wheel bearing apparatus incorporated with a wheel speed detecting apparatus of the prior art; and
Fig. 6 is a partially enlarged longitudinal-section view of Fig. 5.

### DESCRIPTION OF THE PREFERRED EMBODIMENTS

### First Embodiment

Preferred embodiments of the present invention will be described with reference to accompanied drawings.

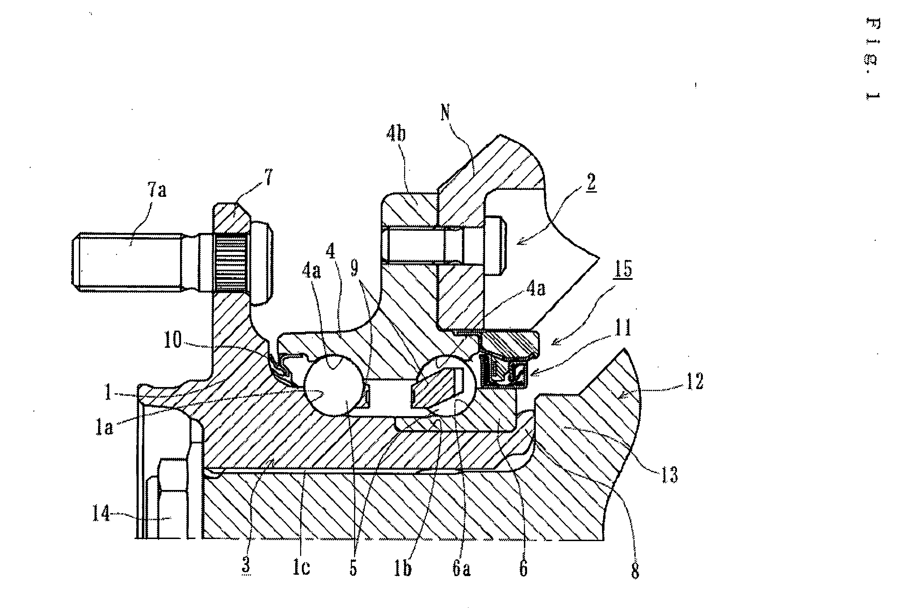

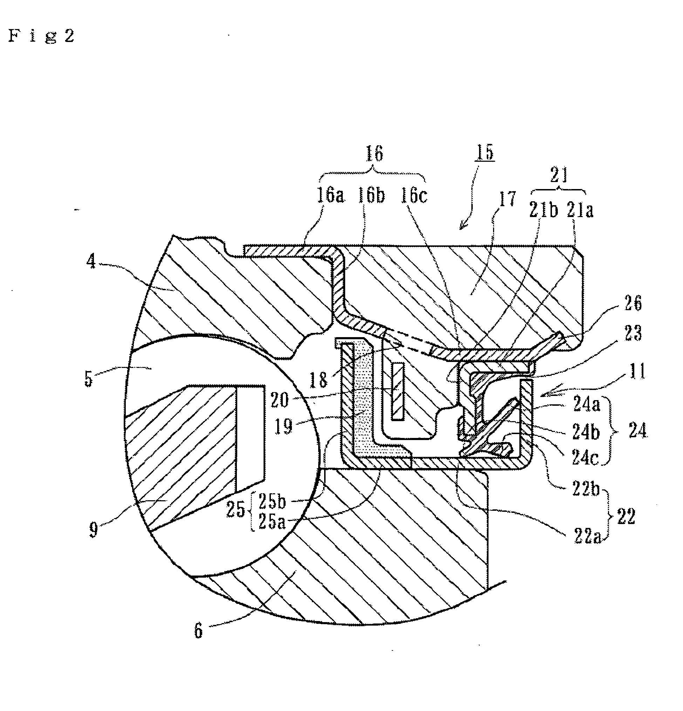

Fig. 1 is a longitudinal-section view of a first embodiment of a wheel bearing apparatus incorporated with a wheel speed detecting apparatus of the present invention, and Fig. 2 is a partially enlarged longitudinal-section view of Fig. 1. In the description of the present invention, an outer side of a bearing apparatus when it is mounted on a vehicle is referred to as "outboard" side (the left side in a drawing), and an inner side of a bearing apparatus when it is mounted on a vehicle is referred to as "inboard" side (the right side in a drawing).

The wheel bearing apparatus incorporated with a wheel speed detecting apparatus of the present invention is that for a driving wheel in which a hub wheel 1 and a double row rolling bearing 2 are formed as a unit arrangement and thus has a structure of so-called a "third generation".
The double row rolling bearing 2 comprises an outer member 4, an inner member 3, and double row rolling elements (balls) 5 and 5. The outer member 4 is made of medium carbon steel including carbon of 0.40~0.80wt% by weight and formed at its outer circumferential surface integrally with body mount flange 4b adapted to be mounted on a knuckle N and also formed at its inner circumferential surface with double row outer raceway surfaces 4a and 4a hardened by high frequency induction quenching to have a surface hardness of 54~64 HRC.

On the other hand, the inner member 3 comprises the hub wheel 1 and an inner ring 6 press fit onto the hub wheel 1. The hub wheel 1 is formed integrally with a wheel mount flange 7 for mounting a wheel (not shown) at its outboard end and hub bolts 7a are secured thereon at its circumferentially equidistant positions. The outer circumferential surface of the hub wheel 1 is formed with one inner raceway surface 1a (outboard side) corresponding to one of the double row outer raceway surfaces 4a and 4a and a cylindrical portion 1b extends axially from the inner raceway surface 1a.

The inner ring 6 is press-fit onto the cylindrical portion 1b via a predetermined interference and formed with the other inner raceway surface 6a (inboard side) corresponding to the other of the double row outer raceway surfaces 4a and 4a. The inner ring 6 is secured axially immovable relative to the hub wheel 1 by the caulked portion 8 formed by plastically deforming the cylindrical portion 1b of the hub wheel 1 and thus so-called a self-retaining structure is formed. The self-retaining structure enables to reduce the weight and size of the bearing apparatus since it is unnecessary to control an amount of preload of the bearing apparatus by tightly fastening the inner ring 6 using a nut as a conventional manner.

The double row rolling elements 5 and 5 are contained between the outer raceway surfaces 4a and 4a of the outer member 4 and the oppositely arranged inner raceway surfaces 1a and 6a and held therein by cages 9 and 9. Seals 10 and 11 are arranged at the ends of the outer member 4 to prevent leak of grease contained within the bearing apparatus as well as ingress of rain water or dusts into the bearing.

The hub wheel 1 is made of medium carbon steel such as S53C including carbon of 0.40~0.80wt% by weight and is formed with a hardened layer having surface hardness 54~64 HRC by high frequency induction hardening from the seal land portion to which the outboard seal 10 sliding contacts to the inner raceway surface 1a and cylindrical portion 1b. The caulked portion 8 is not heat treated as having the surface hardness less than or equal to 25 HRC. Thus it is possible not only to improve the wear resistance of the seal land forming the base of the wheel mount flange 7 but to provide a sufficient mechanical strength against the rotary bending load applied to the wheel mount flange 7 and thus to improve the durability of the hub wheel 1. In addition it is possible to improve the workability of the caulked portion 8 during plastic deformation thereof and to prevent generation of clacking during deformation and thus to improve the reliability of quality.

The hub wheel 1 is formed with a serration (or spline) 1c on its inner peripheral surface into which a outer joint member 12 forming a constant velocity universal joint is inserted. A shoulder 13 of the outer joint member 12 is abutted on the caulked portion 8 of the hub wheel 1 and is axially secured integrally with the hub wheel 1 by a nut 14.

In this embodiment, a sensor holder 15 comprising an annular fitting member 16 and a holding portion 17 is fit on the inboard end of the outer member 4 as clearly shown in Fig. 2. The annular fitting member 16 is formed wholly as an annular body and comprises a cylindrical fitting portion 16a press-fit on the outer circumferential surface of the outer member 4, a flange portion 16b extending radially inward from the fitting portion 16a and adapted to be close contacted with the end surface of the outer member 4, and a cylindrical portion 16c extending axially from the flange portion 16b. The annular fitting member 16 is press-formed of stainless steel having corrosion resistance. The holding portion 17 is molded integrally with the annular fitting member 16 by providing several apertures 18 on the cylindrical portion 16c. The seal 11 is arranged between the cylindrical portion 16c and the inner ring 6 and the sensor holder 15 is press fit on the inboard end of the outer member 4 with the flange portion 16b of the annular fitting member 16 being close contacted with the end face of the outer member 4.

A wheel speed detecting sensor 20 is embedded within the holding portion 17 and arranged oppositely to a magnetic encoder 19 via a predetermined radial gap. The wheel speed sensor 20 comprises a magnetic detecting element such as a Hall element, a magnetic resistance element (MR element) etc. changing characteristics in accordance with the flowing direction of magnetic flux, and an IC incorporated with a waveform shaping circuit for shaping the output waveform of the magnetic detecting element.

The inboard seal 11 comprises first and second annular sealing plates 21 and 22 each having a substantially "L"-shaped cross-sectional configuration and arranged oppositely toward each other. The second sealing plate 22 comprises a cylindrical portion 22a fit on the inner ring 6, and a standing portion 22b extending radially outward from the cylindrical portion 22a. The tip of the standing portion 22b is opposed to the cylindrical portion 21a of the first sealing plate 21 via a small radial gap and forms a labyrinth seal 23 therewith. The second sealing plate 22 is made by press-forming of austenitic stainless steel sheet (JIS SUS 304 etc.) or preserved cold rolled sheet (JIS SPCC etc.).

On the other hand, the first sealing plate 21 comprises a cylindrical portion 21a fit into the cylindrical potion 16c of the annular fitting member 16 of the sensor holder 15, and a standing portion 21b extending radially inward from one end of the cylindrical portion 21a. A sealing member 24 having a side lip 24a, grease lip 24b and a medium lip 24c is made of elastic material such as rubber etc. and adhered to the sealing plate 21 via vulcanized adhesion. The side lip 24a is slidably contacted with the standing portion 22b of the second sealing plate 22, and the grease lip 24b and medium lip 24c are slidably contacted with the cylindrical portion 22a of the second sealing plate 22.

A steel base 25 is arranged at the outboard side of the seal 11 oppositely thereto with sandwiching the holding portion 17 of the sensor holder 15. The base 25 comprises a cylindrical portion 25a adapted to be fit onto the inner ring 6 and a standing portion 25b extending radially outward from the cylindrical portion 25a and is made by press-forming of ferritic stainless steel sheet (JIS SUS 430 etc.) or preserved cold rolled sheet (JIS SPCC etc.). Adhered via vulcanized adhesion on the outboard side surface of the standing portion 25b is a magnetic encoder 19 formed of elastomer such as rubber etc. with which magnetic powder is mingled. The magnetic encoder 19 has poles N and S alternately arranged along its circumference direction and forms a rotary encoder for detecting the wheel rotation speed.

According to this embodiment of the present invention, since the holding portion 17 is molded integrally with the annular fitting member 16, the wheel speed sensor 20 is embedded in the holding portion 17, the seal 11 is fit into the inboard side of the sensor 20, and the magnetic encoder 19 is arranged at the outboard side of the seal 11 with sandwiching the holding portion 17 therebetween, it is possible to prevent ingress of foreign matter such as magnetic powder into a space between the magnetic encoder and the detecting portion of the wheel speed sensor from the outside of the bearing apparatus although before the stem portion of the outer joint member is inserted into the hub wheel including a course in which the bearing apparatus is transferred to an assemble line of a manufacturer of automobile and also under severe circumstances in real running of vehicle. Thus it is possible to improve the reliability of detection of the wheel speed. And it is also possible to reduce the radial size of the wheel bearing apparatus and to simplify the structure of the wheel speed sensor and its associated parts and thus to further improve the workability of its assembly.

Also in this embodiment of the present invention, the tip end 26 of the cylindrical portion 16c of the annular fitting member 16 extends radially outward from the cylindrical portion 16c in an inclined form, and the plastic resin forming the holding portion 17 is molded as it envelopes the tip end 26 of the cylindrical portion 16c. Thus it is possible to increase the strength of connection between the annular fitting member 16 and the holding portion 17 and thus to prevent separation of them due to vibration of the wheel bearing apparatus during its transportation and handling.

Although it is exemplary shown in this embodiment that the wheel rotation speed sensor 20 comprises the magnetic encoder 19 and the magnetic detecting element such as Hall effect element, the wheel speed detecting apparatus is not limited to such a structure and may be a passive type apparatus comprising a magnetic encoder, magnets, and annular coils etc. Also although it is exemplary shown in this embodiment the wheel bearing apparatus for a driving wheel side, the present invention can be applied to a wheel bearing apparatus for a driven wheel side if it has a structure of inner ring rotation type.

### Second embodiment

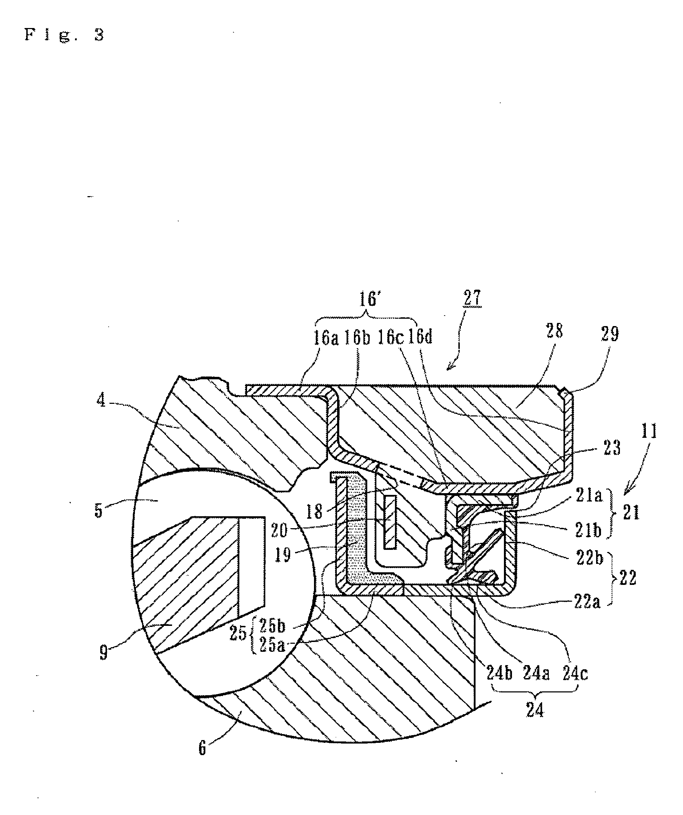

Fig. 3 is an enlarged view showing a second embodiment of the wheel bearing apparatus incorporated with a wheel speed detecting apparatus of the present invention. This second embodiment is different from the first embodiment only in the structure of the annular fitting member. Accordingly same reference numerals are used also in the second embodiment for designating same parts having same functions of parts as those used in the first embodiment.

A sensor holder 27 comprises an annular fitting member 16' and a holding portion 28 integrally formed with the annular fitting member 16'. The annular fitting member 16' is formed wholly as an annular body and comprises a cylindrical fitting portion 16a press-fit on the outer circumferential surface of the outer member 4, a flange portion 16b extending radially inward from the fitting portion, a cylindrical portion 16c extending axially from the flange portion 16b, and an engaging portion 16d upstanding radially outward from the cylindrical portion 16c. The holding portion 28 is molded integrally with the annular fitting member 16' by providing several apertures 18 on the cylindrical portion 16c. The seal 11 is arranged between the cylindrical portion 16c of the annular fitting member 16' of the sensor holder 27 and the inner ring 6. The sensor holder 27 is press fit on the inboard end of the outer member 4 with the flange portion 16b of the annular fitting member 16' being close contacted with the end face of the outer member 4.

According to the second embodiment of the present invention, the tip end 29 of the engaging portion 16d of the annular fitting member 16' is caulked onto the holding portion 28 after the holding portion 28 having been molded onto the annular fitting member 16'. Thus it is possible to increase the strength of connection between the annular fitting member 16' and the holding portion 28 and thus to prevent separation of them similarly to the first embodiment of the present invention.

### Third embodiment

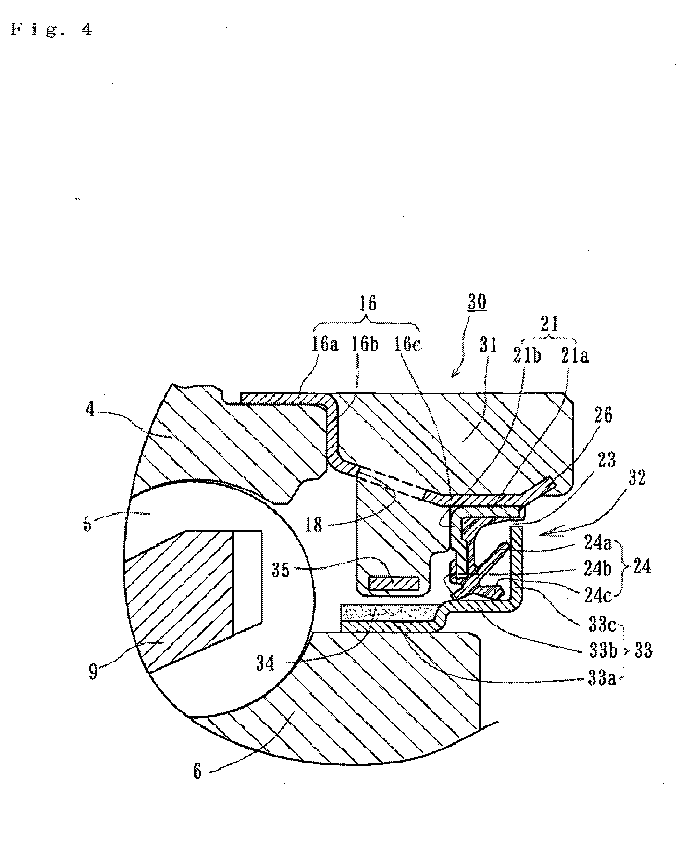

Fig. 4 is an enlarged view showing a third embodiment of the wheel bearing apparatus incorporated with a wheel speed detecting apparatus of the present invention. This second embodiment is different from the first embodiment (Fig. 2) only in the structure of the detecting portion. Accordingly same reference numerals are used also in the third embodiment for designating same parts having same functions of parts as those used in the first embodiment.

A sensor holder 30 formed as an annular configuration comprises the annular fitting member 16 and a holding portion 31 integrated with the annular fitting member 16 and mounted on the inboard end of the outer member 4. The holding portion 31 is formed by synthetic resin and molded integrally with the annular fitting member 16 by providing several apertures 18 on the cylindrical portion 16c of the annular fitting member 16. A wheel speed detecting sensor 35 is embedded within the holding portion 31 and arranged oppositely to a magnetic encoder 34 via a predetermined radial gap. The wheel speed sensor 35 comprises a magnetic detecting element such as a Hall element, a magnetic resistance element (MR element) etc. changing characteristics in accordance with the flowing direction of magnetic flux, and an IC incorporated with a waveform shaping circuit for shaping the output waveform of the magnetic detecting element.

An inboard seal 32 comprises first and second annular sealing plates 21 and 33 each having a substantially "L"-shaped cross-sectional configuration and mounted respectively on the sensor holder 30 and the inner ring 6 so that they are faced oppositely toward each other. The second sealing plate 33 comprises a cylindrical portion 33a fit on the inner ring 6, and another cylindrical portion 33b of larger diameter extending axially from the cylindrical portion 33a and a standing portion 33c extending radially outward from the cylindrical portion 33b. The tip of the standing portion 33c is opposed to the cylindrical portion 21a of the first sealing plate 21 via a small radial gap and forms a labyrinth seal 23 therewith. The second sealing plate 22 is made by press-forming of ferritic stainless steel sheet (JIS SUS 430 etc.) or preserved cold rolled sheet (JIS SPCC etc.).

The side lip 24a on the first sealing plate 21 is slidably contacted with the standing portion 33c of the second sealing plate 33, and the grease lip 24b and medium lip 24c are slidably contacted with the cylindrical portion 33b of larger diameter of the second sealing plate 33. Adhered via vulcanized adhesion on the outboard side surface of the cylindrical portion 33a is a magnetic encoder 34 formed of elastomer such as rubber etc. with which magnetic powder is mingled. The magnetic encoder 34 has poles N and S alternately arranged along its circumference direction and forms a rotary encoder for detecting the wheel rotation speed.

According to this embodiment of the present invention, since the holding portion 31 is molded integrally with the annular fitting member 16, the wheel speed sensor 35 is embedded in the holding portion 31, the seal 32 is fit into the sensor holder 30 from the inboard side of the sensor 35, it is possible to prevent ingress of foreign matter such as magnetic powder into a space between the magnetic encoder and the detecting portion of the wheel speed sensor from the outside of the bearing apparatus although before the outer joint member 12 is inserted into the hub wheel 1 including a course in which the bearing apparatus is transferred to an assemble line of a manufacturer of automobile and also under severe circumstances in real running of vehicle.

### Applicability in industries

The wheel bearing apparatus incorporated with a wheel speed detecting apparatus of the present invention can be applied to any type of the wheel bearing apparatus in which the wheel speed detecting apparatus is self-contained irrespective of use in the driving wheel or driven wheel having the inner ring rotation structure.

The present invention has been described with reference to the preferred embodiment. Obviously, modifications and alternations are possible for those of ordinary skill in the art upon reading and understanding the preceding detailed description. It is intended that the present invention be construed as including all such alternations and modifications insofar as they come within the scope of the appended claims.

## Claims

1. A wheel bearing apparatus incorporated with a wheel speed detecting apparatus comprising:
- an outer member (4) having a body mount flange (4b) formed integrally therewith and double row outer raceway surfaces (4a, 4a) formed on the inner circumferential surface of the outer member (4);
- an inner member (3) including a hub wheel (1) having a wheel mount flange (7) formed integrally therewith at one end thereof and a cylindrical portion (1b) axially extending from the wheel mount flange (7) and including an inner ring (6) fit on the cylindrical portion (1b) of the hub wheel (1);
- double row inner raceway surfaces (1a, 6a) opposite to the double row outer raceway surfaces (4a, 4a), one of the inner raceway surfaces (6a) being formed on the outer circumferential surface of the inner ring (6);
- double row rolling elements (5) arranged between the outer and inner raceway surfaces (4a, 4a; 1a, 6a);
- an encoder (19, 34) mounted on the outer circumferential surface of the inner ring (6);
- a sensor holder (15, 27, 30) arranged on the end of the outer member (4) oppositely to the encoder (19, 34) and including an annular fitting member (16, 16') and a holding portion (17, 28, 31) formed by synthetic resin molded integrally with the annular fitting member (16, 16') and embedded therein a wheel speed detecting sensor (20, 35) oppositely to the encoder (19, 34) via a predetermined gap;
- a first seal (10); wherein
- the encoder (19, 34) has its magnetic characteristics varying alternately and equidistantly along its circumferential direction; wherein
- a second seal (11, 32) is arranged at the inboard side of the encoder (19, 34) and at the inboard side of the wheel speed detecting sensor (20, 35), said second seal (11, 32) including a first sealing plate (21) and a second sealing plate (22, 33) fit respectively on the annular fitting member (16, 16') and the inner ring (6) arranged oppositely with each other, wherein
- the tip end (26, 29) of the annular fitting member (16, 16') engages the holding portion (17, 28, 31), wherein
- the annular fitting member (16, 16') comprises a cylindrical fitting portion (16a), a flange portion (16b) extending radially inward from the fitting portion (16a) and a cylindrical portion (16c) extending axially from the flange portion,
**characterized in that**
- one of the inner raceway surfaces (1a) is formed on the outer circumferential surface of the hub wheel (1) ;
- the cylindrical fitting portion (16a) is press fit onto the outer circumferential surface of the outer member (4);
- the flange portion (16b) is in contact with the end face of the outer member (4); and
- the first sealing plate (21) is fit into the cylindrical portion (16c).

2. The wheel bearing apparatus incorporated with a wheel speed detecting apparatus of claim 1 wherein the tip end (26) of the cylindrical portion (16c) of the annular fitting member (16) extends radially outward from the cylindrical portion (16c) in an inclined form, and wherein the plastic resin forming the holding portion (17) is molded as it envelopes the tip end (26) of the cylindrical portion (16c).

3. The wheel bearing apparatus incorporated with a wheel speed detecting apparatus of claim 1 wherein the annular fitting member (16') has an engaging portion (16d) extending radially outward from the cylindrical portion (16c), and wherein the tip end (29) of the engaging portion (16d) is caulked onto the holding portion (28) after the holding portion (28) having been molded onto the annular fitting member (16').

4. The wheel bearing apparatus incorporated with a wheel speed detecting apparatus of any one of claims 1 - 3 wherein the second sealing plate (22, 33) has a substantially "L" shaped cross-section having a cylindrical portion (22a, 33a) adapted to be fit onto the inner ring (6) and a standing portion (22b, 33c) extending radially outward from the cylindrical portion (22a, 33a), and wherein sealing lips (24a, 24b, 24c) of a sealing member (24) mounted on the first sealing plate (21) slidably contact the second sealing plates (22, 33).

## Patentansprüche

1. Radlagervorrichtung mit Radgeschwindigkeitssensor, umfassend:
- ein äußeres Glied (4) mit einem Karosserieanbringungsflansch (4b), der einstückig damit ausgebildet ist, und zweireihigen äußeren Laufringflächen (4a, 4a), die auf der Innenumfangsfläche des äußeren Glieds (4) ausgebildet sind;
- ein inneres Glied (3), das eine Radnabe (1) enthält, die einen Radanbringungsflansch (7), der einstückig damit an einem Ende davon ausgebildet ist, und einen zylindrischen Abschnitt (1b) aufweist, der axial vom Radanbringungsflansch (7) verläuft und einen Innenring (6) enthält, welcher auf den zylindrischen Abschnitt (1b) der Radnabe (1) gepasst ist;
- zweireihige innere Laufringflächen (1a, 6a), die den zweireihigen äußeren Laufringflächen (4a, 4a) gegenüberliegen, wobei eine der inneren Laufringflächen (6a) auf der Außenumfangsfläche des Innenrings (6) ausgebildet ist;
- zweireihige Rollelemente (5), die zwischen den äußeren und inneren Laufringflächen (4a, 4a; 1a, 6a) ausgebildet sind;
- einen Encoder (19, 34), der auf der Außenumfangsfläche des Innenrings (6) angebracht ist;
- einen Sensorhalter (15, 27, 30), der am Ende des äußeren Glieds (4) gegenüber dem Encoder (19, 34) angeordnet ist und ein ringförmiges Passelement (16, 16') und einen Halteabschnitt (17, 28, 31) enthält, der aus einstückig mit dem ringförmigen Passelement (16, 16') gegossenen Kunstharz ausgebildet ist und in den dem Encoder (19, 34) über einen vorgegebenen Spalt gegenüberliegend ein Radgeschwindigkeitssensor (20, 35) eingelassen ist;
- eine erste Abdichtung (10); wobei
- die magnetischen Merkmale des Encoders (19, 34) abwechselnd und in gleichen Abständen entlang seiner Umfangsrichtung variieren; wobei
- eine zweite Abdichtung (11, 32) auf der Innenseite des Encoders (19, 34) und auf der Innenseite des Radgeschwindigkeitssensors (20, 35) angeordnet ist, wobei die zweite Abdichtung (11, 32) eine erste Dichtungsplatte (21) und eine zweite Dichtungsplatte (22, 33) enthält, die jeweils auf das ringförmige Passelement (16, 16') und den Innenring (6) gepasst sind, die einander gegenüberliegend angeordnet sind, wobei
- das Spitzenende (26, 29) des ringförmigen Passelements (16,16') den Halteabschnitt (17, 28, 31) in Eingriff nimmt, wobei
- das ringförmige Passelement (16,16') einen zylindrischen Passabschnitt (16a), einen Flanschabschnitt (16b), der vom Passabschnitt (16a) radial einwärts verläuft, und einen zylindrischen Abschnitt (16c) umfasst, der axial vom Flanschabschnitt verläuft,
**dadurch gekennzeichnet, dass**
- eine der inneren Laufringflächen (1a) auf der Außenumfangsfläche der Radnabe (1) ausgebildet ist;
- der zylindrische Passabschnitt (16a) auf die Außenumfangsfläche des äußeren Glieds (4) aufgepresst ist;
- der Flanschabschnitt (16b) mit der Endfläche des äußeren Glieds (4) in Kontakt ist; und
- die erste Dichtungsplatte (21) in den zylindrischen Abschnitt (16c) gepasst ist.

2. Radlagervorrichtung mit Radgeschwindigkeitssensor nach Anspruch 1, wobei das Spitzenende (26) des zylindrischen Abschnitts (16c) des ringförmigen Passelements (16) in einer geneigten Form vom zylindrischen Abschnitt (16c) radial auswärts verläuft, und wobei das Kunstharz, das den Halteabschnitt (17) ausbildet, gegossen wird, während es das Spitzenende (26) des zylindrischen Abschnitts (16c) umhüllt.

3. Radlagervorrichtung mit Radgeschwindigkeitssensor nach Anspruch 1, wobei das ringförmige Passelement (16') einen Eingriffsabschnitt (16d) aufweist, der vom zylindrischen Abschnitt (16c) radial auswärts verläuft, und wobei das Spitzenende (29) des Eingriffsabschnitts (16d) auf dem Halteabschnitt (28) nach dem Gießen des Halteabschnitts (28) auf das ringförmige Passelement (16') verstemmt wird.

4. Radlagervorrichtung mit Radgeschwindigkeitssensor nach einem der Ansprüche 1 bis 3, wobei die zweite Dichtungsplatte (22, 33) einen im Wesentlichen "L"-förmigen Querschnitt mit einem zylindrischen Abschnitt (22a, 33a), der zum Passen auf den Innenring (6) geeignet ist, und einen aufrechten Abschnitt (22b, 33b) aufweist, der vom zylindrischen Abschnitt (22a, 33a) radial auswärts verläuft, und wobei Dichtungsränder (24a, 24b, 24c) eines Dichtungsglieds (24), das auf der ersten Dichtungsplatte (21) angebracht ist, die zweiten Dichtungsplatte (22, 33) gleitbar berühren.

## Revendications

1. Appareil de roulement de roue incorporé dans un appareil de détection de la vitesse de la roue, comprenant :
- un élément extérieur (4) ayant une bride de montage de la carosserie (4b) formée d'une pièce avec celui-ci et des surfaces extérieures de chemin de roulement à double rangée (4a, 4a) formées sur la surface de circonférence intérieure de l'élément extérieur (4) ;
- un élément intérieur (3) comprenant un moyeu (1) ayant une bride de montage de roue (7) formée d'une pièce avec celui-ci à une de ses extrémités et une partie cylindrique (1b) s'étendant de manière axiale depuis la bride de montage de roue (7) et comprenant un anneau interne (6) ajusté à la partie cylindrique (1b) du moyeu (1) ;
- des surfaces intérieures de chemin de roulement à double rangée (1a, 6a) opposées aux surfaces extérieures de chemin de roulement à double rangée (4a, 4a), l'une des surfaces intérieures de chemin de roulement (6a) étant formée sur la surface de circonférence extérieure de l'anneau interne (6) ;
- des éléments de roulement à double rangée (5) agencés entre les surfaces extérieures et intérieures de chemin de roulement (4a, 4a ; 1a, 6a) ;
- un encodeur (19, 34) monté sur la surface extérieure de circonférence de l'anneau interne (6) ;
- un support de capteur (15, 27, 30) agencé sur l'extrémité de l'élément extérieur (4), de manière opposée à l'encodeur (19, 34) et comprenant un élément de montage annulaire (16, 16') et une partie de support (17, 28, 31) formée par une résine synthétique, moulée d'une pièce avec l'élément de montage annulaire (16, 16') et piégeant un capteur de détection de la vitesse de la roue (20, 35) opposé à l'encodeur (19, 34) via un intervalle prédéterminé ;
- un premier joint (10) ; où
- l'encodeur (19, 34) présente des caractéristiques magnétiques qui varient de manière alternative et équidistante en direction de sa circonférence ; où
- un deuxième joint (11, 32) est agencé côté intérieur de l'encodeur (19, 34) et côté intérieur du capteur de détection de la vitesse de la roue (20, 35), ledit deuxième joint (11, 32) comprenant une première plaque d'étanchéité (21) et une deuxième plaque d'étanchéité (22, 33) ajustées respectivement sur l'élément de montage annulaire (16, 16') et l'anneau interne (6) agencées de manière opposée l'une par rapport à l'autre, où
- l'extrémité de pointe (26, 29) de l'élément de montage annulaire (16, 16') s'engage avec la partie de support (17, 28, 31), où
- l'élément de montage annulaire (16, 16') comprend une partie cylindrique de montage (16a), une partie de bride (16b) s'étendant de manière radiale vers l'intérieur depuis la partie de montage (16a), et une partie cylindrique (16c) s'étendant axialement depuis la partie de bride,
**caractérisé en ce que**
- l'un des surfaces intérieures de chemin de roulement (1a) est formée sur la surface extérieure de circonférence du moyeu (1) ;
- la partie cylindrique de montage (16a) est ajustée par pression sur la surface extérieure de circonférence de l'élément extérieur (4) ;
- la partie de bride (16b) est en contact avec la face d'extrémité de l'élément extérieur (4) ; et
- la première plaque d'étanchéité (21) est ajustée dans la partie cylindrique (16c).

2. Appareil de roulement de roue incorporé dans un appareil de détection de la vitesse de la roue selon la revendication 1, où l'extrémité de pointe (26) de la partie cylindrique (16c) de l'élément de montage annulaire (16) s'étend de manière radiale vers l'extérieur depuis la partie cylindrique (16c) de manière inclinée, et où la résine plastique formant la partie de support (17) est moulée pour qu'elle enveloppe l'extrémité de pointe (26) de la partie cylindrique (16c).

3. Appareil de roulement de roue incorporé dans un appareil de détection de la vitesse de la roue selon la revendication 1, où l'élément de montage annulaire (16') présente une partie en engagement (16d) s'étendant de manière radiale vers l'extérieur depuis la partie cylindrique (16c), et o l'extrémité de pointe (26) de la partie en engagement (16d) est calfaté sur la partie de support (28) après que la partie de support (28) ait été moulée sur l'élément de montage annulaire (16').

4. Appareil de roulement de roue incorporé dans un appareil de détection de la vitesse de la roue selon l'une quelconque des revendications 1 à 3, où la deuxième plaque d'étanchéité (22, 33) a une coupe transversale sensiblement en forme de « L », avec une partie cylindrique (22a, 33a) adaptée pour s'ajuster à l'anneau interne (6) et une partie debout (22b, 33c) s'étendant radialement vers l'extérieur depuis la partie cylindrique (22a, 33a) et où des lèvres d'étanchéité (24a, 24b, 24c) d'un élément d'étanchéité (24) monté sur la première plaque d'étanchéité (21) est en contact glissant avec la deuxième plaque d'étanchéité (22, 33).
